# NEUE EUROPÄISCHE PATENTSCHRIFT

(11) **EP 0 596 461 B2**
(45) Veröffentlichungstag und Bekanntmachung des Hinweises auf die Entscheidung über den Einspruch: **30.10.2002**
(45) Hinweis auf die Patenterteilung: 08.04.1998
(21) Anmeldenummer: 93117776.0
(22) Anmeldetag: 03.11.1993
(51) Int. Cl.: C09D 201/00, C09D 5/02

(54) **Verfahren zur Herstellung von Lackierungen**
Process for producing coatings
Procédé pour la préparation de revêtements

(30) Priorität: 06.11.1992 DE 4237492
(43) Veröffentlichungstag der Anmeldung: 11.05.1994
(73) Patentinhaber: E.I. DU PONT DE NEMOURS AND COMPANY, Wilmington Delaware 19898 (US)
(72) Erfinder: Bederke, Klaus, Dr., D-45549 Sprockhövel (DE); Brock, Thomas, Dr., D-50354 Hürth (DE); Flosbach, Carmen, Dr., D-42115 Wuppertal (DE); Schubert, Walter, Dr., D-42349 Wuppertal (DE)
(74) Vertreter: Gille Hrabal Struck Neidlein Prop Roos

(56) Entgegenhaltungen:
- EP-A- 0 136 411
- EP-A- 0 224 158
- EP-A- 0 420 133
- EP-A- 0 542 209
- EP-A- 0 582 188
- DE-A- 3 315 469
- GB-A- 2 102 430
- US-A- 4 408 018
- US-A- 5 017 649

## Beschreibung

Die Erfindung betrifft ein Verfahren zur Herstellung von Mehrschichtlackierungen auf dem Kraftfahrzeugsektor.

In der EP-A-13 64 11 werden hitzehärtbare Bindemittelmischungen beschrieben, die ein organisches Harz und ein Vernetzungsmittel auf der Basis von Michael-Addukten aus CH-aciden, enolisierbaren Carbonsäureestern mit α, β-ethylenisch ungesättigten Molekülgruppen enthaltenden Verbindungen und zusätzlich Vernetzungskatalysatoren enthalten. In der DE-A-33 15 469 werden Härtungskomponenten für Kunstharze beschrieben, die aus dem Michael-Additionsprodukt eines zur Michael-Addition befähigten Mono- oder Dicarbonsäureesters und einer Verbindung, die mindestens eine Doppelbindung enthält, bestehen. In der nicht vorveröffentlichten älteren Anmeldung EP-A-0 582 188 werden Überzugsmittel beschrieben, die als Vernetzer Verbindungen mit mindestens 2 CH-aciden Wasserstoffatomen sowie α,β-ungesättigte Verbindungen mit einer Carbonylgruppe sowie einen Vernetzungskatalysator aufweisen. Bei diesen Überzugsmitteln, ist es wesentlich, daß Photoinitiatoren enthalten sind.

Überzugsmittel auf der Basis CH-acider Verbindungen und olefinisch ungesättigter Verbindungen sind bekannt. Beispielsweise werden in der EP-A-0 224 158 Zweikomponenten-Lacke beschrieben, die derartige Komponenten enthalten. Diese Zweikomponenten-Lacke sind in, der Wärme härtbar; die Härtungsreaktion wird durch Lewis- und/oder Brönstedt-Basen katalysiert. In der EP-A-0 027 454 werden Acetoacetatpolymere als Vernetzer für Acryloyl-ungesättigte Acrylate beschrieben. Derartige Systeme sind für die Herstellung von verschiedenen Überzügen geeignet. Diese Zweikomponentenlacke enthalten noch in hohem Maße Lösemittel und weisen damit unter umweltpolitischen Gesichtspunkten Nachteile auf.

Aufgabe der Erfindung ist die Bereitstellung eines Verfahrens unter Verwendung einer Bindemittelzusammensetzung, die zur Herstellung von wäßrigen Überzugsmitteln mit geringem Lösemittelgehalt geeignet ist, die bei niedriger Temperatur, z.B. bei Raumtemperatur rasch zu Filmen mit guter Härte, Wasser- und Lösemittelbeständigkeit ausgehärtet werden können.

Es hat sich gezeigt, daß diese Aufgabe gelöst werden kann durch ein Verfahren zur Herstellung von Mehrschicht-Lackierungen bei der Herstellung von Kraftfahrzeug-Serien- und Reparaturlackierungen durch Auftrag eines wässrigen Basislackes, gegebenenfalls kurzes Ablüften und nass-in-nass-Auftrag eines Klarlackes und anschließende gemeinsame Härtung, dadurch gekennzeichnet, dass man als Basislack und/oder Klarlack ein wässriges Überzugsmittel verwendet, dass frei von Photoinitiatoren und Polyaminhärtern ist, und eine wässrige Bindemittelzusammensetzung enthält, die:
A) 10 - 90 Gew.% einer oder mehrerer als Vernetzer wirkender Verbindungen mit im Mittel mindestens zwei CH-aciden Wasserstoffatomen und, die aus einer oder mehreren der folgenden Gruppierungen stammen, die gleich oder verschieden sein können: 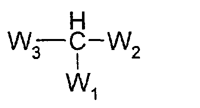 worin 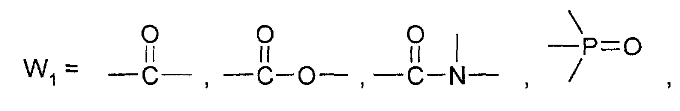 ―CN oder ―NO₂ 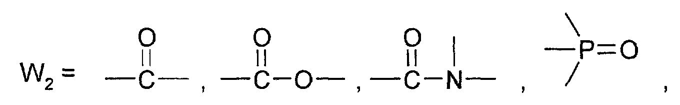 oder ―CN 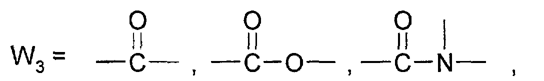 H, Alkyl oder Alkylen wobei die Reste 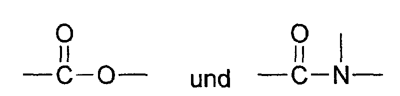 jeweils über das Kohlenstoffatom an die CH-Gruppe gebunden sind und die CH-Gruppe über mindestens einen der Reste W₁, W₂ und/oder W₃ an eine polymere oder oligomere Einheit gebunden ist, und
B) 90 - 10 Gew.% eines oder mehrerer zur Michael-Addition geeigneter (Meth)acrylcopolymerer, Polyesterund/oder Polyurethanharze mit mindestens zwei über das Carbonyl-Kohlenstoffatom von 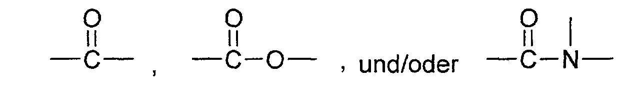 gebundenen, α,β-ungesättigten Gruppen, mit einem C=C-Äquivalentgewicht von 85 - 1800 und einem Zahlenmittel des Molekulargewichtes (Mn) von 170- 10000 g/mol, wobei das Äquivalentverhältnis von A:B 2:1 bis 1:2 beträgt;
C) 0,01 - 5 Gew.%, bezogen auf die Summe der Gewichte der Komponenten A) und B) eines Katalysators in Form einer Lewis- oder Brönstedt-Base, wobei die konjugierten Säuren der letzteren einen pKA-Wert von mindestens 10 haben,
sowie Wasser, ein oder mehrere organische Lösemittel, sowie gegebenenfalls Pigmente und/oder Füllstoffe und/oder lackübliche Zusatzstoffe enthält.

Die wäßrigen Bindemittelzusammensetzungen können zu wäßrigen Überzugsmitteln verarbeitet werden, die neben der Bindermittelzusammensetzung ein oder mehrere organische Lösemittel, sowie gegebenenfalls Pigmente und/oder Füllstoffe und/oder lackübliche Zusatzstoffe enthalten. Gegebenenfalls können auch weitere Bindemittelkomponenten enthalten sein.

Es handelt sich bei den in den Überzugsmitteln als Komponente A) eingesetzten CH-aziden Vernetzern um solche die mindestens zwei CH-azide Wasserstoffatome enthalten, die aus einer oder mehreren der folgenden Gruppierungen stammen, die gleich oder verschieden sein können: 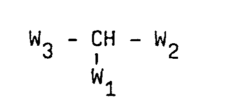 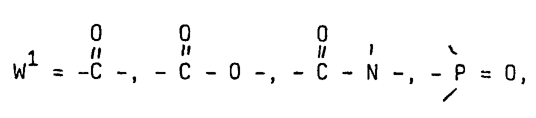 -CN oder-NO₂ 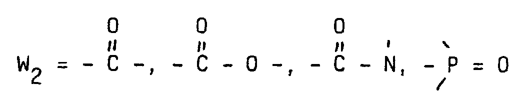 oder -CN 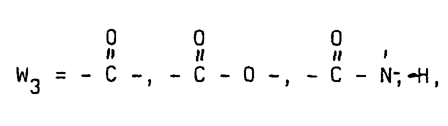 Alkyl oder Alkylen wobei Alkyl und Alkylen bevorzugt 1 bis 6 C-Atome haben und wobei die vorstehend für die Reste W₁, W₂ und W₃ definierten Carboxyl- oder Carbonamid-Gruppen jeweils über das Kohlenstoffatom an die CH-Gruppe gebunden sind und die CH-Gruppe über mindestens einen der Reste W₁, W₂ und/oder W₃ an eine polymere oder oligomere Einheit gebunden ist. Die CH-azide Funktionalität der Komponente A) beträgt im Mittel > 2 pro Molekül. Wenn daher W₃ in der vorstehenden allgemeinen Formel die Bedeutung eines Wasserstoffatoms hat, so genügt eine derartige Gruppe, da diese zwei azide Wasserstoffatome aufweist.

Wie vorstehend erwähnt, beträgt die CH-azide Funktionalität der Komponente A) im Mittel > 2. Dies bedeutet, daß im Gemisch mit höherfunktionellen Molekülen auch monofunktionelle Moleküle verwendet werden können.

Bevorzugt sind die CH-aciden Vemetzerverbindungen im wesentlichen frei von primären, sekundären oder tertiären Aminogruppen, da diese die Lagerstabilität und die Lichtbeständigkeit negativ beeinflussen können.

Im Folgenden sind Beispiele für CH-acide Vernetzerkomponenten A) aufgeführt, die unter die vorstehende allgemeine Formel fallen. Diese Beispiele werden im Folgenden in drei Gruppen A1, A2 und A3 unterteilt.

In der Gruppe A1 sind im Molekül im Mittel mindestens zwei Gruppen mit aktiven H-Atomen vom Typ 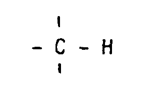 enthalten, die sich von Methantricarbonsäuremonoamideinheiten oder Acetessigsäureester-2-carbonsäureamiden ableiten.

Geeignete Verbindungen A1 sind beispielsweise Umsetzungsprodukte von Malonsäurediester wie Malonsäuredimethyl-, diethyl-, dibutyl-, dipentylester oder Acetessigsäureester, wie Acetessigsäuremethyl-, -ethyl, -butyl-, -pentylester mit Polyisocyanaten.

Beispiele für derartige erfindungsgemäß einsetzbare Isocyanate sind (Cyclo)aliphatische oder aromatische Polyisocyanate wie Tetramethylendiisocyanat, Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcylohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4'-triisocyanat, Tetramethylxylylendiiso cyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für das erfindungsgemäße Verfahren geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-lsocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62-300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet.

In diesen bekannten Prepolymeren entspricht das Verhältnis von Isocyanatgruppen zu gegenüber NCO reaktiven Wasserstoffatomen 1,05 bis 10:1, vorzugsweise 1,1 bis 3:1, wobei die Wasserstoffatome vorzugsweise aus Hydroxylgruppen stammen.

Die Art und Mengenverhältnisse der bei der Herstellung der NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 aufweisen.

Als Verbindung A1 eignen sich aber auch Umsetzungsprodukte von Estem und Teilestern mehrwertiger Alkohole der Malonsäure mit Monoisocyanaten. Mehrwertige Alkohole sind z.B. zwei- bis fünf-wertige Alkohole wie Ethandiol, die verschiedenen Propan-, Butan-, Pentan- und Hexandiole, Polyethylen- und Polyproplyendiole, Glycerin, Trimethylolethan und - propan, Pentaerythrit, Hexantriol und Sorbit. Geeignete Monoisocyanate sind z.B. aliphatische Isocyanate wie n-Butylisocyanat, Octadecylisocyanat, cycloaliphatische Isocyanate wie Cyclohexylisocyanat, araliphatitische Isocyanate wie Benzylisocyanat oder aromatische Isocyanate wie Phenylisocyanat.

Geeignet sind auch die entsprechenden Malonester von OH-Gruppen enthaltenden Acrylharzen, Polyestern, Polyurethanen, Polyethem, Polyesteramiden und -imiden und/oder Umsetzungsprodukte von Malonsäurehalbestem wie Malonsäuremonoethylester mit aliphatischen und aromatischen Epoxidharzen, z.B. epoxidgruppenhaltigen Acrylatharzen, Glycidylethem von Polyolen wie Hexandiol, Neopentylglykol, Diphenylolpropan und -methan und Glycidylgruppen enthaltenden Hydantoinen, ferner Gemische dieser Verbindungen.

Die Beispiele der folgenden Gruppe A2 zeigen eine geeignete Härtungskomponente mit aktiven CH-Gruppen, die mindestens zwei Gruppen der Formel (I) 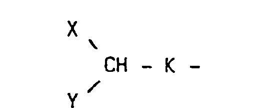 oder Struktureinheiten der Formel (I') oder (I") 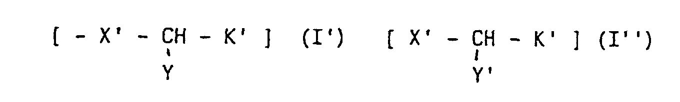 enthält, in der bedeuten: 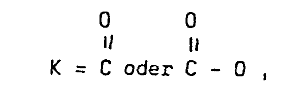 wobei die letztere Gruppe über das C-Atom an die OH-Gruppe gebunden ist
X, Y = gleich oder verschieden 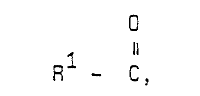 CO₂R¹, CN, NO₂, CONH₂, CONR¹H, CONR¹R¹, wobei die Reste R¹ gleich oder verschieden sein können und für einen Kohlenwasserstoffrest, vorzugsweise einen Alkylrest mit 1 bis 12, vorzugsweise 1 bis 6 C-Atomen stehen, der auch durch Sauerstoff oder einen N-Alkylrest unterbrochen sein kann, mit der Maßgabe, daß nur einer der beiden Reste X, Y die NO₂-Gruppe darstellen kann; 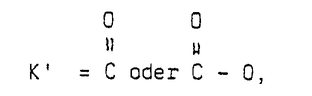 wobei letztere Gruppe über das C-Atom an die CH-Gruppe gebunden ist, X', Y' = gleich oder verschieden 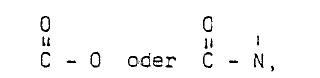 mit der Maßgabe, daß bei K' und X' gleich 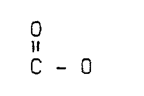 der Rest Y' vorzugsweise nicht gleich 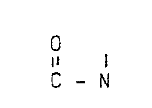 ist.

Die Zahl der Gruppen (I) in dem Härter beträgt vorzugsweise 2 bis 200 und insbesondere 2 bis 10, wobei sich die größeren Zahlenwerte auf oligomere oder polymere Produkte beziehen und hier Mittelwerte darstellen.

Vorzugsweise besitzt die Härtungskomponente A2 die Formel (II) 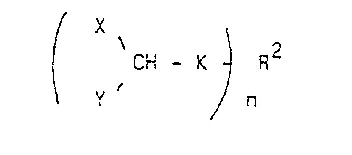 in der X, Y und K die obige Bedeutung haben, R² den Rest eines Polyols 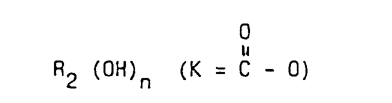 oder den Rest R² einer Polycarbonsäure 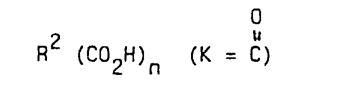 darstellt und n mindestens 2, vorzugsweise 2 bis 200, insbesondere 2 bis 10 bedeutet. Im Falle von oligomeren oder polymeren Härtungskomponenten handelt es sich bei diesen Zahlenangaben wiederum um Mittelwerte.

Weiterhin bevorzugt sind Härtungskomponenten, die unter die Gruppe A2 fallen, die man durch Umesterung von Verbindungen der Formel (III) oder der Formel (IV) 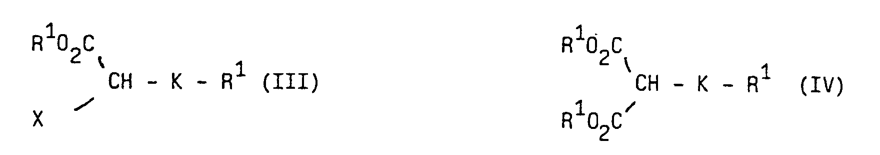 mit Polyolen R²(OH)ₙ erhält, wobei X, K und R¹ die obige Bedeutung haben.

Bei den vorstehend genannten Polyolen R² (OH)ₙ kann es sich um einen mehrwertigen Alkohol handeln, der vorzugsweise 2 bis 12, insbesondere 2 bis 6 C-Atome enthält. Beispiele hierfür sind: Ethylenglykol, Propylenglykol-(1,2) und -(1,3), Butylenglykol-(1,4) und -(2,3), Di-β-hydroxyethylbutandiol, Hexandiol-(1,6), Octandiol-(1,8), Neopentylglykol, Cyclohexandiol-(1,6), 1,4-Bis-(hydroxymethyl)-cyclohexan, 2,2-Bis-(4-hydroxycylohexyl)-propan, 2,2-Bis-(4-β-hydroxyethoxy)phenyl-propan, 2-Methyl-1,3-propandiol, Glycerin, Trimethylolpropan, Hexantriol-(1,2,6), Butantriol-(1,2,4), Tris-(β-hydroxyethyl)-isocyanurat, Trimethylolethan, Pentaerythrit und deren Hydroxyalkylierungsprodukte, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol. Auch Polyester, die aus oder mit Lactonen, z.B. ε-Caprolacton oder Hydroxycarbonsäuren, wie z.B. Hydroxypivalinsäure, ω-Hydroxydecansäure, ω-Hydroxycapronsäure, Thioglykolsäure erhalten werden, können eingesetzt werden. Der Index n in obiger Formel (II) steht im Falle derartiger mehrwertiger Alkohole vorzugsweise für 2 bis 4.

Altemativ kann das Polyol eine oligomere oder polymere Polyolverbindung (Polyolharz) darstellen, deren Zahlenmittel des Molekulargewichts (Mn) (bestimmt mittels Gelchromatographie; Polystyrolstandard), üblicherweise im Bereich von etwa 170 bis 10000, vorzugsweise etwa 500 bis etwa 5000 liegt. In Sonderfällen kann das Molekulargewicht jedoch 10000 und mehr betragen. Als Oligomere/Polymere kommen dabei Polymerisate, Polykondensate oder Polyadditionsverbindungen in Betracht. Die Hydroxylzahl beträgt im allgemeinen 30 bis 250, vorzugsweise 45 bis 200 und insbesondere 50 bis 180 mg KOH/g. Diese OH-gruppenhaltigen Verbindungen können gegebenenfalls noch andere funktionelle Gruppen enthalten, wie Carboxylgruppen.

Beispiele für derartige Polyole sind Polyetherpolyole, Polyacetalpolyole, Polyesteramidpolyole, Polyamidpolyole, Epoxidharzpolyole oder deren Umsetzungsprodukte mit CO₂, Phenolharzpolyole, Polyhamstoffpolyole, Polyurethanpolyole, Celluloseester und -etherpolyole, teilweise verseifte Homo- und Copolymerisate von Vinylestern, teilweise acetalisierte Polyvinylalkohole, Polycarbonatpolyole, Polyesterpolyole oder Acrylatharzpolyole. Bevorzugt sind Polyetherpolyole, Polyesterpolyole, Acrylatharze und Polyurethanpolyole. Derartige Polyole, die auch in Mischung eingesetzt werden können, sind beispielsweise in der DE-A-31 24 784 beschrieben.

Beispiele für Polyurethanpolyole ergeben sich aus der Umsetzung von Di- und Polyisocyanaten mit einem Überschuß an Di- und/oder Polyolen. Geeignete Isocyanate sind z.B. Hexamethylendiisocyanat, Isophorondiisocyanat, Toluylendiisocyanat als auch Isocyanate, gebildet aus drei Molen eines Diisocyanats wie Hexamethylendiisocyanat oder Isophorondiisocyanat, und Biurete, die aus der Reaktion von drei Molen eines Diisocyanates mit einem Mol Wasser hervorgehen. Geeignete Polyharnstoffpolyole können in ähnlicher Weise durch Umsetzen von Di- und Polyisocyanaten mit äquimolaren Mengen von Aminoalkoholen, z.B. Ethanolamin oder Diethanolamin, erhalten werden.

Beispiele für Polyesterpolyole sind die bekannten Polykondensate aus Di- oder Polycarbonsäuren oder deren Anhydriden, wie Phthalsäureanhydrid, Adipinsäure usw., und Polyolen wie Ethylenglykol, Trimethylolpropan, Glycerin usw.

Geeignete Polyamidpolyole können in ähnlicher Weise wie die Polyester erhalten werden, indem man die Polyole zumindest teilweise durch Polyamine, wie Isophorondiamin, Hexamethylendiamin, Diethylentriamin usw. ersetzt.

Beispiele für Polyacrylatpolyole oder OH-gruppenhaltige Polyvinylverbindungen sind die bekannten Copolymerisate aus hydroxylgruppenhaltigen (Meth)Acrylsäureestern oder Vinylalkohol und anderen Vinylverbindungen, wie z. B. Styrol oder (Meth)Acrylsäureestern.

Die obigen Polycarbonsäuren R²(CO₂H)ₙ, wobei n hier bevorzugt 2 bis 4 ist, können aliphatischer, cycloaliphatischer, aromatischer und/oder heterocyclischer Natur sein und gegebenenfalls, z.B. durch Halogenatome, substituiert und/oder gesättigt sein. Als Beispiele für solche Carbonsäuren und deren Derivate seien genannt: Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, 1,3- und 1,4-Cyclohexandicarbonsäure, Di- und Tetrachlorphthalsäure, Endomethylentetrahydrophthalsäure und ihr Hexachlorderivat, Glutarsäure, Maleinsäure, Fumarsäure, dimere und trimere Fettsäuren, wie Ölsäure, gegebenenfalls in Mischung mit monomeren Fettsäuren oder cyclischen Monocarbonsäuren, wie Benzoesäure, p-tert-Butylbenzoesäure oder Hexahydrobenzoesäure, weiterhin die Umsetzungsprodukte der oben genannten Polyole R²(OH)ₙ mit cyclischen Carbonsäureanhydriden

Bei der Härtungskomponente A2 handelt es sich, je nach Art der Polyol- bzw. Polycarbonsäurekomponente, um mehr oder weniger viskose Flüssigkeiten oder um Feststoffe, die zumindest in den üblichen Lacklösemitteln weitgehend löslich sind und vorzugsweise weniger als 5 Gew.%, insbesondere weniger als 1 Gew.% an vernetzten Anteilen enthalten. Das CH-Äquivalentgewicht, das ein Maß für die Menge an Gruppen (I) bzw. Struktureinheiten (I') / (II") in (A2) ist, liegt im allgemeinen zwischen 100 und 5000, vorzugsweise 200 und 2000 und das Zahlenmittel des Molekulargewichts (Mn) in der Regel bei 200 bis 10000, vorzugsweise bei 500 bis 5000 (gelchromatographisch bestimmt; Polystyrolstandard). Verfahren zur Herstellung solcher Verbindungen sind in der EP-A-0 310 011 näher beschrieben.

Weitere Beispiele für die Härterkomponente sind solche vom Typ A3, bei dem sich die Gruppierung CH ableitet von einer Verbindung mit der Gruppierung -CO-CHR³-CO-, NC-CHR³-CO, NC-CH₂-CN, =PO-CHR³-CO-, =PO-CHR³-CN, =PO-CHR³-PO=, -CO-CHR³-NO₂, worin R³ C₁-C₈-Alkyl, H, vorzugsweise Wasserstoff ist. β-Dioxoverbindungen sind bevorzugt.

Die vorstehenden Gruppierungen von A3 können an mindestens eine mehrwertige monomere oder polymere Verbindung gebunden sein. Sie können beispielsweise an mindestens eine Verbindung der Gruppe ein- oder mehrwertige Alkohole, OH-Gruppen enthaltende Polymere, Polyamine und Polymercaptane gebunden sein. Sie sind, bezogen auf die CH-Funktion, mehrwertig. So können sie beispielsweise durch Veresterung eines Polyepoxids mit einer die Gruppierung bildenden -CH-Carbonsäure, z.B. Cyanessigsäure, hergestellt worden sein. Man erhält so eine Komponente A3 mit zwei aktiven H-Atomen je Epoxidgruppe. Hierbei lassen sich aromatische oder aliphatische Polyepoxide einsetzen.

Geeignete Beispiele für Verbindungen des Typs A3 sind Ketone, wie Acetylaceton, Benzoylaceton, Acetyldibenzoylmethan, ferner Ester der gegebenenfalls alkylsubstituierten Acetessigsäure wie α- und/oder γ-Methylacetessigsäure, oder der Acetondicarbonsäure, esterartig gebundene Malonsäureeinheiten der Malonsäure und deren Monoalkylderivate, geradkettig oder verzweigt, mit 1 bis 6 C-Atomen im Alkylrest, z.B. Methyl, Ethyl und n-Butyl oder auch Phenyl, oder der Cyanessigsäure mit ein- bis 6-wertigen Alkoholen mit 1 bis 10 C-Atomen. Die alkylsubstituierten Ester, z.B. α-Methyl- oder α,γ-Dimethylacetatessigester, haben nur ein aktives H-Atom und werden daher vorzugsweise in Form von Di- oder Polyestern mehrwertiger Alkohole eingesetzt, um eine genügende Anzahl reaktiver Gruppen zur Verfügung zu haben. Geeignete Alkohole für die Veresterung vorstehender Säuren sind z.B. Methanol, Ethanol, Butanol, Octanol und/oder, was bevorzugt ist, mehrwertige Alkohole bzw. Polyhydroxyverbindungen. Weitere Beispiele für A3 sind z.B. Acetessigester, Ethandiol-bisacetessigester, Glycerintris-malonsäureester, Trimethylolpropantris-acetessigester, Teilester dieser Säuren mit mehrwertigen Alkoholen, ebenfalls die entsprechenden Ester von OH-Gruppen enthaltenden Acrylharzen, Polyestern, Polyethern, Polyesteramiden und -imiden, Polyhydroxylaminen, ferner Nitrile dieser Säuren, sofern diese existieren, z.B. Malonsäuremono- oder -dinitril, Alkoxycarbonyl-methanphosphonsäureester und die entsprechenden Bis-methanphosphonsäureester. Die vorstehend genannten Säuren können auch in Form von Amiden an Amine, vorzugsweise Polyamine, gebunden sein, die auch Oligomere und/oder Polymere einschließlich Aminharze umfassen, wobei aliphatische Amine bevorzugt sind.

Wenn man von Polyaminen ausgeht, lassen sich Verbindungen A3 in Form von Amiden herstellen. So kann man z.B. von 1 Mol eines Alkylendiamins ausgehen, das mit 2 Mol Acetessigester umgesetzt wird unter Bildung einer Verbindung, die ebenfalls vier durch Amidgruppen aktivierte H-Atome aufweist.

Als Verbindungen für A3 eignen sich auch reaktive Nitroverbindungen, z.B. Nitroessigsäurederivate, wie Tris-(nitroessigsäure)-glycerinester oder Trimethylolpropan-nitroessigsäureester.

Unter Verbindungen für A3, die Gruppen des Typs -CH- bilden, sind z.B. Diketen sowie dessen Mono- -Alkylsubstitutionsprodukte, ferner Tetrahydrodioxin zu nennen, die mit geeigneten Komponenten unter Bildung von Acetessigester- oder -amid-Gruppen reagieren können.

Die Härterkomponenten A) können in üblichen Lösemitteln hergestellt werden. Es ist günstig, solche Lösemittel zu verwenden, die später bei der Herstellung des Überzugsmittels nicht stören. Es ist auch günstig, den Gehalt an organischen Lösemitteln möglichst gering zu halten. Wenn die Härterkomponente A) polare Gruppen enthält, z.B. Amid- oder Urethan-Gruppierungen, so ist eine leichte Dispergierung in Wasser möglich. Dies kann gegebenenfalls auch dadurch unterstützt werden, daß die Vernetzerkomponenten neutralisierbare ionische Gruppen, z.B. Carboxylgruppen, im Oligomer- oder Polymergerüst enthalten. Solche Vernetzer mit ionischen Gruppen können gut in Wasser dispergiert werden. Dabei kann der Gehalt an organischen Lösemitteln auf niedrige Werte gesenkt werden, ohne die Viskosität der Vernetzerlösung wesentlich zu erhöhen.

Als Komponente B) werden zur Michael-Addition geeignete (Meth)acrylcopolymere, Polyesterund/oder Polyurethanharze eingesetzt, wie sie vorstehend definiert wurden. Sie enthalten mindestens zwei zur Michael-Addition befähigte Gruppen, also Gruppen, die durch mindestens eine negativierende Gruppe aktivierte Doppelbindungen aufweisen (Michael-Acceptor). Es handelt sich um α,β-ungesättigte Gruppen, die in die Ketten der Copolymeren oder Harze eingebaut sein können. Sie können bevorzugt auch seiten- und/oder endständig sein. Geeignete Verbindungen B) sind beispielsweise in der DE-PS-835 809, in der US-PS-4,408,018 sowie in den EP-A- 16 16 79 und 22 41 58 beschrieben, auf die hier Bezug genommen wird. Es sind Verbindungen (B) mit mindestens zwei Gruppen der Formel

R⁵R⁴C=CR⁴ - Z (V)

in der bedeuten:
- R⁵ =: Wasserstoff oder ein Kohlenwasserstoffrest, vorzugsweise ein Alkylrest mit 1 bis 12, vorzugsweise mit 1 bis 4 C-Atomen, wie die Methyl-, Ethyl-, n-Proply-, Iso-Propyl-, n-Butyl- oder tert. Butylgruppe;
- R⁴ =: gleich oder verschieden und Wasserstoff, ein Kohlenwasserstoffrest, vorzugsweise Alkylrest mit 1 bis 10, vorzugsweise 1 bis 4 C-Atomen, eine Estergruppe -CO₂R¹, eine -CN, -NO₂, -SO₂, -CONHR¹, -CONR¹R¹ oder -COR¹-Gruppe, wobei R¹ gleich oder verschieden, und wie vorstehend für die Formel I definiert sind: 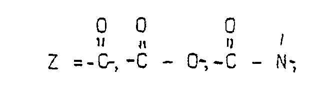
wobei die beiden letzteren Gruppen über das C-Atom an die CR⁴-Gruppe gebunden sind.

Bevorzugt stehen R⁵ und R⁴ in der oben R⁵R⁴-C-Gruppe jeweils für Wasserstoff.

Die obigen Gruppen V sind indirekt miteinander verbunden. Als indirekte Verknüpfung kommt hier beispielsweise ein Kohlenwasserstoffrest, vorzugsweise jedoch der Rest eine mehrwertigen Alkohols oder eines mehrwertigen Amins oder Aminoalkohols in Frage. Diese indirekte Verknüpfung kann dabei auch ein Teil der Kette eines Oligomeren und/oder Polymeren sein, d.h. die Gruppen V können in den Seitenketten des Oligomeren bzw. Polymeren vorhanden sein oder diese Seitenketten bilden.

Nach einer speziellen Ausführungsform besitzt die Verbindung B) die Formel

(R⁵R⁴C = CR⁴ - Z)ₘR² (VI)

in der R⁵, R⁴ und Z die Bedeutung gemäß Formel (V) haben, R² der Bedeutung in Formel (II) entspricht und m mindestens 2, vorzugsweise 2 bis 200 bedeutet.

Die Gruppe R⁵R⁴C = CR⁴ - Z - (V) kann beispielsweise von einer ein- oder mehrfach ungesättigten Mono- oder Dicarbonsäure mit 2 bis 20, vorzugsweise 3 bis 10 C-Atomen abgeleitet sein.

Beispiele für solche Carbonsäuren sind Crotonsäure, Citraconsäure oder deren Anhydrid, Sorbinsäure, Fumarsäure, Mesaconsäure, substituierte und unsubstituierte Zimtsäuren, Dihydrolävulinsäure. Malonsäuremononitril, α-Cyanacrylsäure, Alkylidenmalonsäure, Alkylidenacetessigsäure, vorzugsweise Acrylsäure, Methacrylsäure und/oder Maleinsäure oder dessen Anhydrid. Die über die Gruppe Z, aber auch über den Rest R⁴ mögliche Anknüpfung des Michael-Acceptors an das Verbindungsglied, wie an einen polymeren Träger, kann über Ester-, Amid-, Urethan- oder Harnstoffgruppen erfolgen.

Entsprechend dem Vorstehenden können die Gruppen gemäß der Formel (V) an den Rest eines Polyols, eines Polyamins, Polyamids oder Polyiminoamids gebunden sein, wobei dieser Rest auch oligomer oder polymer sein kann.

Als Polyole kommen hier grundsätzlich die gleichen in Frage, wie weiter oben im Zusammenhang mit dem Michael-Donator erwähnt, also mehrwertige Alkohole oder oligomere bzw. polymere Polyolverbindungen, z.B. Polyetherpolyole, Polyesterpolyole, Acrylatharzpolyole und Polyurethanpolyole.

Als Aminogruppen enthaltende Träger (Polyamine) kommen beispielsweise die oben erwähnten Alkylendiamine und deren Oligomere, wie Ethylendiamin, Propylendiamin, Butylendiamin, Diethylentriamin, Tetramine und höhere Homologe dieser Amine, ferner Aminoalkohole, wie Diethanolamin oder dergleichen in Betracht.

Als Beispiele für die Verbindungen der Komponente B) seien hier genannt: Alkylglykoldi(meth)acrylate wie Ethylenglykoldiacrylat, Diethylenglykoldiacrylat, Propylenglykoldiacrylat, Trimethylenglykoldiacrylat, Neopentylglykoldiacrylat, 1,3-Butylenglykoldiacrylat, 1,4-Butylenglykoldiacrylat, 1,6-Hexamethylenglykoldiacrylat, 1,10-Decamethylenglykoldiacrylat, Trimethylolpropantriacrylat, Pentaerythrittetraacrylat, Pentaerythrittriacrylat und die entsprechenden Methacrylate, sowie alkoxylierte und propoxylierte Derivate.

Außerdem kann die über ein Carbonylkohlenstoffatom gebundene α,β-ungesättigte Gruppe an Polymere gebunden sein, z.B. Kondensationspolymere, wie Polyester oder Polyadditionspolymere, wie Polyurethane, Polyether oder (Meth)acrylcopolymere oder Vinylpolymerisate, wie Glycidyl(meth)acrylatcopolymere. Erwähnt seien hier beispielsweise Urethanacrylate, erhalten durch Umsetzung von Polyisocyanaten, wie Hexamethylendiisocyanat mit Hydroxyalkylacrylaten, wie Hydroxyethylacrylat oder durch Reaktion von hydroxylgruppenhaltigen Polyestern, Polyethern, Polyacrylaten mit Polyisocyanaten und Hydroxyalkylacrylaten, Urethanacrylate, erhalten durch Reaktion von Caprolactondiol oder -triol mit Polyisocyanaten und Hydroxyalkylacrylaten, Polyetheracrylate, erhalten durch Veresterung von Hydroxypolyethern mit Acrylsäure, Polyesteracrylate, erhalten durch Veresterung von Hydroxypolyestern mit Acrylsäure, Polyacrylate, erhalten durch Reaktion von Acrylsäure mit Vinylpolymerisaten mit Epoxidgruppen, z.B. Copolymerisate von Glycidyl(meth)acrylat oder Vinylglycidylether. Unter (Meth)acryl ist hier und im Folgenden Acryl- und/oder Methacryl zu verstehen.

Auch Gemische der obigen Verbindungen sind als Komponente B) möglich.

Das C=C-Äquivalentgewicht der Komponente B) liegt beispielsweise bei 85 bis 1800, vorzugsweise bei 180 bis 1200 und das Zahlenmittel der Molmasse (Mn) beispielsweise bei 170 bis 10000 und vorzugsweise 500 bis 5000.

Die Bindemittelzusammensetzungen können zur Viskositätseinstellung auch 2-Acetoacetoxy-ethyl(meth)acrylat als Reaktivverdünner enthalten.

Das Überzugsmittel umfaßt eine Mischung aus der CH-aciden Vernetzerkomponente A) sowie dem Bindemittel B). Es können auch Gemische von unterschiedlichen Komponenten A) oder B) eingesetzt werden. Die Bindemittel sind untereinander verträglich und können zur besseren Mischbarkeit gegebenenfalls Lösemittel enthalten. Dafür sind Lösemittel bevorzugt, die später im Lack nicht negativ wirken.

Das Verhältnis der beiden Komponenten A) und B) hängt von der Anzahl der verfügbaren C-H-aciden Kohlenwasserstoffatome der Vernetzerkomponente und der Anzahl der ungesättigten Gruppen der α,β-ungesättigten Verbindung ab. Da die reaktiven Gruppen titrimetisch bestimmt werden können, können genau eingestellte stöchiometrische Mischungsverhältnisse herbeigeführt werden. Bevorzugt beträgt das Äquivalent-Verhältnis der CH-aciden : α,β-ungesättigten Gruppen 2:1 bis 1:2, insbesondere etwa 0,75:1 bis 1,25:1. Auf diese Weise wird in der Regel eine ausreichende Vemetzungsdichte erzielt.

Die Elastizität des vernetzten Produktes läßt sich innerhalb eines Toleranzbereiches z.B. durch die Kettenlänge der für A) und B) eingesetzten Oligomeren und/oder Polymeren steuern. Die eingesetzten Oligomeren und/oder Polymeren können somit je nach der gewünschten Elastizität des vernetzten Produktes gewählt werden. Der Vernetzungsgrad läßt sich über die Funktionalität der eingesetzten Verbindungen A) und B) steuem. So läßt sich der Vernetzungsgrad erhöhen, wenn in mindestens einer der Verbindungen A) und B) drei oder mehr reaktive Gruppen vorhanden sind.

Die Komponente C) besteht aus Katalysatoren in Form von Lewis-Basen oder Brönstedt-Basen, wobei die konjugierten Säuren der letzteren einen pKA-Wert von mindestens 10 haben. Die Komponente C) kann aus einem oder mehreren Katalysatoren bestehen. Als besonders geeignet erwiesen sich Lewis-Basen, wie z.B. solche der Gruppe von cycloaliphatischen Aminen, wie Diazabicyclooctan (DABCO), tert.-aliphatischen Aminen, wie Triethylamin, Tripropylamin, N-Methyldiethanolamin, N-Methyldiisopropylamin oder N-Butyldiethanolamin, sowie Amidinen wie. Diazabicycloundecen (DBU), und Guanidinen, wie z.B. N, N, N',N'-Tetramethylguanidin. Weitere Beispiele sind alkyl- oder arylsubstituierte Phosphane, wie z.B. Tributylphosphan, Triphenylphosphan, Tris-p-tolylphosphan, Methyldiphenylphosphan, sowie hydroxy- und aminfunktionalisierte Phosphane, wie z.B. Trishydroxymethylphosphan und Tris-dimethylaminoethylphosphan.

Beispiele für die einsetzbaren Brönstedt-Basen sind Alkoholate. wie Natrium- oder Kaliumethanolat, quartäre Ammoniumverbindungen, wie Alkyl-, Aryl- oder Benzylammoniumhydroxide oder -halogenide, wie z.B. Tetraethyl- oder Tetrabutylammoniumhydroxid oder -fluorid, sowie Trialkyl- oder Triaryl-phosphoniumsalze oder -hydroxide.

Die Menge der Katalysatoren beträgt im allgemeinen 0,01 bis 5 Gew.%, vorzugsweise 0,02 bis 2 Gew.%, bezogen auf den Gesamtfeststoffgehalt der Komponenten A), B).

Die Vernetzerkomponente A) und Bindemittelkomponente B) oder die Mischungen davon werden in wäßriger Form eingesetzt.

Dazu können die Vernetzerkomponente A) und die Bindemittelkomponente B), gegebenenfalls mit geringen Lösemittelanteilen und gegebenenfalls zusammen mit Emulgatoren in die Wasserphase überführt werden. Bei den Lösungsmitteln handelt es sich bevorzugt um solche, die mit Wasser mischbar sind. Die Lösungsmittelmenge kann beispielsweise bis zu 20 Gew.%, bevorzugt bis zu 10 Gew.%, bezogen auf die fertige wäßrige Zusammensetzung, betragen. Als Emulgatoren können ionische oder nichtionische, bevorzugt nichtionische Emulgatoren, eingesetzt werden. Der Gehalt an Emulgator kann beispielsweise bei 0,5 bis 30 Gew.%, bevorzugt zwischen 1,5 und 15 Gew.%, bezogen auf den Festkörperanteil der Komponente A) und Komponente B) im fertigen wäßrigen Überzugsmittel, liegen.

Zur Bereitung der wäßrigen Disperionen können übliche Verfahren angewendet werden, die dem Fachmann geläufig sind. So können beispielsweise die lösemittelhaltigen Formen der Komponenten A) und B) oder der Gemische davon weitgehend von Lösemitteln befreit werden, bevorzugt durch Destillation unter vermindertem Druck, worauf bevorzugt in die noch warmen, dünnviskosen Harze bzw. Harzmischungen der Emulgator eindispergiert werden kann und dann diese Mischung zu der Wasserphase gefügt werden kann, beispielsweise unter intensivem Mischen. Die Herstellung der Dispersion kann dabei durch Erwärmen der Wasserphase unterstützt werden. Als Mischaggregate sind beispielsweise schnellaufende Rührer oder Rotor/Stator-Mischer geeignet. Es ist auch möglich, das Dispersionsergebnis durch Hochdruck- oder Ultraschall-Homogenisatoren zu verbessern.

Die Komponenten A) und B) können erst gemischt und dann zusammen emulgiert werden, selbstverständlich können die Vernetzerkomponente A) und die Bindemittelkomponente B) aber auch separat emulgiert und anschließend gemischt werden.

Das Verfahren kann kontinuierlich oder diskontinuierlich geführt werden. Die entstehenden Dispersionen können auch zu diesem Zeitpunkt miteinander gemischt werden. Man erhält eine wäßrige Öl-in-Wasser-Dispersion, die lagerstabil ist und mit Wasser ohne Probleme auf geringere, zur Applikation geeignete Festkörpergehalte eingestellt werden kann. Die erfindungsgemäß erhaltenen wäßrigen Dispersionen können beispielsweise einen Festkörperbereich von 25 - 55 Gew.%, bezogen auf die fertige Dispersion, aufweisen. Zur Applikation können sie gegebenenfalls mit Wasser, z.B. auf eine geeignete Spritzviskosität verdünnt werden.

Als Emulgatoren sind handelsübliche ionische oder nicht-ionische Emulgatoren geeignet. Es können beispielsweise Umsetzungsprodukte von Alkylphenyolen mit Alkylenoxiden oder Umsetzungsprodukte von Sorbitanfettsäureestern mit Alkylenoxiden, z.B. C₁-C₁₂-Alkylphenolethoxylate, verwendet werden.

Die Komponente C) ist in der Regel wasserlöslich, kann bei Bedarf aber auch wie beschrieben emulgiert werden.

Bei den Bindemittelzusammensetzungen handelt es sich um sogenannte Zweikomponenten-Systeme.

Die Komponenten A) und B) werden gemeinsam als Bindemittelkomponente 1 und die Komponente C) als Härterkomponente 2 gelagert. Gegebenenfalls ist es auch möglich, die Komponente B) als Bindemittelkomponente 1 und die Komponenten A) und C) als Härterkomponente 2 zu lagem, sofern A) und C) nicht miteinander reagieren.

Dies bedeutet, daß die Komponenten 1 und 2 getrennt gelagert werden und erst vor der Anwendung bzw. zur Anwendung beispielsweise zur Herstellung von Überzugsmitteln vermischt werden.

Die Überzugsmittel können aus den Einzelkomponenten nach üblichen, dem Fachmann geläufigen, Verfahren hergestellt werden. Zur Herstellung der Überzugsmittel können den eingesetzten Vernetzungs- und Bindemittelkomponenten gegebenenfalls übliche lacktechnische Additive zugesetzt werden, wie z. B. Antikratermittel, Antischaummittel, Verlaufsmittel, Antiabsetzmittel, Viskositätsregler, UV-Stabilisatoren oder Haftvermittler. Über die Menge der Additive können die Applikations- und Verfilmungseigenschaften beeinflußt werden.

Es können gegebenenfalls auch bekannte Pigmente und/oder Füllstoffe in das Überzugsmittel eingearbeitet werden. Die Verfahren, z.B. Dispergieren oder Vermahlen, sind in der Literatur schon häufig beschrieben. Als Pigmente sind die üblichen Pigmente für Klar- oder Decklacke geeignet, beispielsweise Ruß, Titandioxid, feindisperses Siliciumdioxid, Aluminiumsilikat, Talkum, organische und anorganische Farbpigmente, transparente Farbstoffe, Metalleffekt-Pigmente oder vernetzte Polymer-Mikroteilchen. Je nach Auswahl der Pigmente können Grundierungen, Füller, Metalleffektlacke, Decklacke, farbige Decklacke oder Klarlacke hergestellt werden.

Die Überzugsmittel können neben Wasser nichtreaktive Cosolventien enthalten. Diese dienen zur Einstellung der Viskosität bei der Applikation sowie zur Beeinflussung des Verlaufs sowie um bestimmte Lackeffekte zu erzielen. Beispiele für solche Lösemittel sind aromatische Kohlenwasserstoffe, z.B. Xylole, aliphatische Kohlenwasserstoffe, z.B. n-Hexan oder Cyclohexan, Ketone, wie z.B. Aceton, Methylisopropylketon, Ester, wie z.B. Butylacetat oder Ethylacetat, Ether, wie z.B. Methoxypropanol oder Butoxypropanol. Es können aber auch Alkohole, wie z. B. Isopropanol, Hexanol oder Ethylglykol eingesetzt werden. Über den Siedepunkt oder das unterschiedliche Lösevermögen der Lösemittel können Applikations- und Verlaufseigenschaften beeinflußt werden. Die zugesetzte Lösemittelmenge hängt somit von den gewünschten Eigenschaften, insbesondere Viskositätseigenschaften, der Überzugsmittel ab. Bei Verwendung von Wasser als Lösemittel entstehen echte Lösungen, Emulsionen oder Dispersionen. Wasserhaltige Überzugsmittel besitzen einen besonders geringen Gehalt an flüchtigen organischen Bestandteilen.

Die aus den Bindemitteln hergestellten Überzugsmittel können auf die gewünschte Applikationsviskosität durch entsprechende Regelung des Zusatzes von Wasser und/oder Additiven eingestellt werden.

Die Überzugsmittel können je nach Mengenverhältnis der Komponenten 1 zur Komponente 2, Äquivalentgewicht und Katalysatormenge beispielsweise auf Topfzeiten zwischen wenigen Minuten und mehreren Stunden eingestellt werden.

Die Applikation der so hergestellten Überzugsmittel kann in üblicher Weise erfolgen, beispielsweise durch Tauchen, Spritzen, Streichen oder auf elektrostatischem Wege.

Die Aushärtung von aus den Überzugsmitteln erstellten Überzügen kann in einem weiten Temperaturbereich von beispielsweise +5°C bis 180°C erfolgen. Bevorzugt ist der Temperaturbereich von 20°C bis 80°C, beispielsweise Raumtemperatur.

Die aus den Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall. Die Überzugsmittel werden im Mehrschichtverfahren eingesetzt. So können sie beispielsweise auf übliche Grundierungen, Basislacke, Füller oder auf bereits vorhandene Decklacke aufgetragen werden. Besonders geeignet sind die Bindemittel für Basislack- und Decklack-, sowie Klarlackzusammensetzungen.

Eine bevorzugte Ausführungsform ist die Applikation des erfindungsgemäßen Überzugsmittels als Klarlacküberzug auf einen erfindungsgemäßen, wäßrigen Basislack. Dabei wird naß-in-naß gearbeitet. Dabei entsteht eine besonders gute Haftung der beiden Schichten.

Das bevorzugte Anwendungsgebiet für die Bindemittel stellt die Bereitstellung von Überzugsmitteln für Lackierungen auf dem Gebiet des Kraftfahrzeugsektors dar. Durch die günstigen Härtungsbedingungen der aus den Bindemitteln hergestellten Überzugsmittel sind diese besonders auch für Kraftfahrzeug-Reparaturlackierungen geeignet.

Die folgenden Beispiele dienen zur Erläuterung der Erfindung. Alle Teile (T) und Prozentangaben (%) beziehen sich auf das Gewicht.

### Beispiel 1

### Herstellung der acetessigesterfunktionalisierten Komponente 1:

In einem 4-Liter-Dreihaiskolben, der mit Rührer, Rückflußkühler, Thermometer und Tropftrichter versehen ist, werden 670 T Trimethylolpropan und 1950 T Acetessigsäureethylester vorgelegt. Das Gemisch wird unter Rühren erhitzt, bis Ethanol abspaltet. Nach 4 Stunden sind 488 g Destillat entstanden; die Temperatur liegt bei 175°C. Es wird Vakuum angelegt und weiter abdestilliert bis insgesamt 806 g Destillat erhalten werden. Die entstandene acetessigesterfunktionelle Komponente 1 hat dann einen theoretischen Festkörper von 96,5 %, eine Viskosität von 172 mPas und eine Säurezahl von 131,6 mg KOH/g Festharz.

Im folgenden wird als Polyacryloylverbindung (Komponente 2) Trimethylolpropantriacrylat (TMPTA) verwendet.

### Beispiel 2

### Herstellung einer wäßrigen Emulsion aus den Komponenten 1 und 2 (Emulsion 3)

In einem 1 Liter-Kolben werden 155,2 g einer 10%igen wäßrigen Lösung eines Emulgators auf der Basis eines Polyoxypropylenpolyoxyethylensorbitansäurediesters bei 60°C vorgelegt. Das Gemisch wird mit einem Rührer, der mit einer Geschwindigkeit von ca. 7500 Umdrehungen/min rotiert, gerührt. Innerhalb von drei Minuten werden bei 60°C ein Gemisch aus 198,3 T der acetessigesterfunktionalisierten Komponente 1 und 151,7 T TMPTA zugegeben. Es werden 50 g vollentsalztes Wasser zugegeben. Die erhaltene milchig-weiße Emulsion hat einen Festkörper von 66,1 %.

### Beispiel 3

### Herstellung eines wäßrigen Basislackes:

a) 100 T der wäßrigen Emulsion 3) werden mit 23,61 T vollentsalztem Wasser und 24,9 T einer handelsüblichen 3%igen Verdickerpaste (rheologisches Additiv) unter intensivem Rühren homogenisiert.
b) Separat werden 4,77 T einer 65 % Lösung einer handelsüblichen Aluminiumpaste in Testbenzin/vollentsalztes Wasser (17,5 %/17,5 %), 3,74 T Butylglykol, 0,35 T eines handelsüblichen Korrosionsinhibitors zur Verhinderung der Aluminiumgasung, 0,7 T N-Methylpyrrolidon und 2,34 T Butanol gemischt. Mit vollentsalztem Wasser wurde auf eine Spritzviskosität von 20" eingestellt.

### Beispiel 4

### Herstellung eines wäßrigen Klarlackes:

a) 49,1 T der wäßrigen Emulsion 3) werden mit 10 T eines handelsüblichen Verdickers und 40,9 T vollentsalztem Wasser vermischt, anschließend mit 100 T einer 10 %igen DBU-Lösung in vollentsalztem Wasser homogenisiert, dann auf Spritzviskosität von 20" eingestellt.

### Beispiel 5

Der Basislack von Beispiel 3 wurde auf ein mit einem handelsüblichen 2 Komponenten-Polyurethanfüller versehenen Blech spritzappliziert, 35 Minuten bei Raumtemperatur abgelüftet und dann der Klarlack von Beispiel 4 appliziert. Es wird erneut 40 Minuten abgelüftet, dann 45 Minuten bei 60°C eingebrannt.

Der erhaltene Film besitzt eine gute Härte, zeigt einen guten Flop und gute Fülle und Glanz.

## Patentansprüche

1. Verfahren zur Herstellung von Mehrschicht-Lackierungen bei der Herstellung von Kraftfahrzeug-Serien- und Reparaturlackierungen durch Auftrag eines wässrigen Basislackes, gegebenenfalls kurzes Ablüften und nass-in-nass-Auftrag eines Klarlackes und anschließende gemeinsame Härtung, **dadurch gekennzeichnet, dass** man als Basislack und/oder Klarlack ein wässriges Überzugsmittel verwendet, das frei von Photoinitiatoren und Polyaminhärtern ist, und eine wässrige Bindemittelzusammensetzung enthält, die:
A) 10 - 90 Gew.% einer oder mehrerer als Vernetzer wirkender Verbindungen mit im Mittel mindestens zwei CH-aciden Wasserstoffatomen und, die aus einer oder mehreren der folgenden Gruppierungen stammen, die gleich oder verschieden sein können: 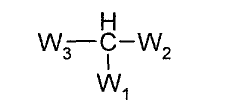 worin 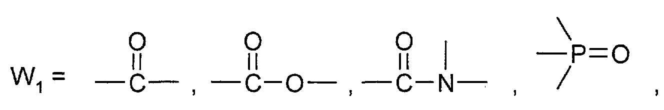 ―CN oder ―NO₂ 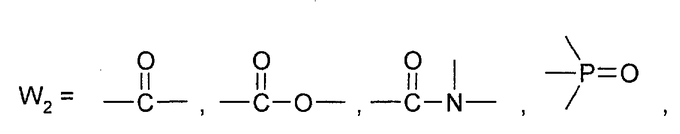 oder ―CN 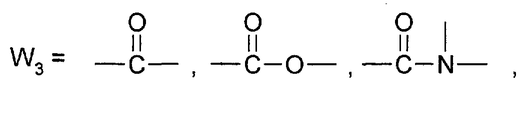 H, Alkyl oder Alkylen wobei die Reste 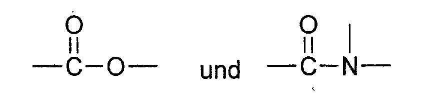 jeweils über das Kohlenstoffatom an die CH-Gruppe gebunden sind und die CH-Gruppe über mindestens einen der Reste W₁, W₂ und/oder W₃ an eine polymere oder oligomere Einheit gebunden ist, und
B) 90 - 10 Gew.% eines oder mehrerer zur Michael-Addition geeigneter (Meth)acrylcopolymerer, Polyester- und/oder Polyurethanharze mit mindestens zwei über das Carbonyl-Kohlenstoffatom von 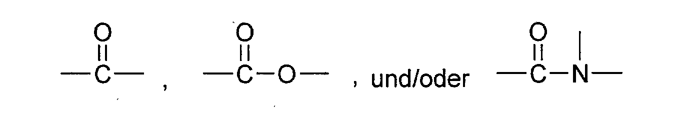 gebundenen, α,β-ungesättigten Gruppen, mit einem C=C-Äquivalentgewicht von 85 - 1800 und einem Zahlenmittel des Molekulargewichtes (Mn) von 170 - 10000 g/mol,
wobei das Äquivalentverhältnis von A:B 2:1 bis 1:2 beträgt;
C) 0,01 - 5 Gew.%, bezogen auf die Summe der Gewichte der Komponenten A) und B) eines Katalysators in Form einer Lewis- oder Brönstedt-Base, wobei die konjugierten Säuren der letzteren einen pKA-Wert von mindestens 10 haben,
sowie Wasser, ein oder mehrere organische Lösemittel, sowie gegebenenfalls Pigmente und/oder Füllstoffe und/oder lackübliche Zusatzstoffe enthält.

## Claims

1. Process for the production of multi-layer lacquer coatings in the production of automotive original and repair lacquer coatings by applying an aqueous base lacquer, optionally briefly flashing-off and applying a clear lacquer wet-on-wet and then curing them together, **characterised in that** an aqueous coating composition is used as the base lacquer and/or clear lacquer, which is free of photoinitiators and polyamine curing agents, and containing an aqueous binder composition, which contains:
A) 10-90 wt.% of one or more compounds acting as a crosslinking agent containing on average at least two CH-acidic hydrogen atoms and originating from one or more of the following groups, which may be identical or different; 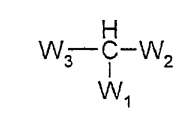 in which 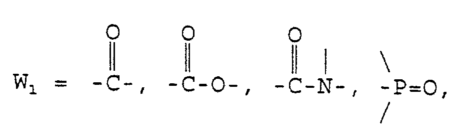 -CN or -NO₂, 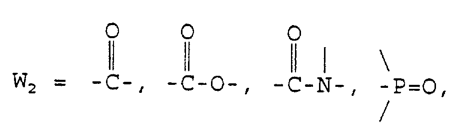 or -CN 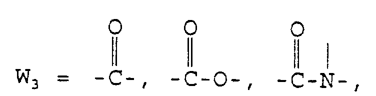 -H, alkyl or alkylene
wherein the residues 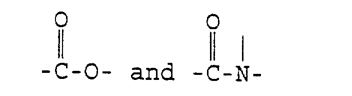 are each attached via the carbon atom to the CH group and the CH group is attached via at least one of the residues W₁, W₂ and/or W₃ to a polymeric or oliogomeric unit, and
B) 90-10 wt% of one or more (meth)acrylic copolymers, polyester and/or polyurethane resins suitable for Michael addition containing at least two α,β-unsaturated groups attached via the carbonyl carbon atom of 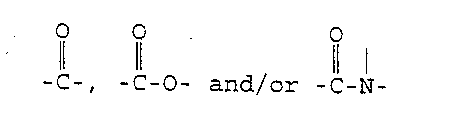 having a C=C equivalent weight of 85-1800 and a number average molecular weight (Mn) of 170-10000 g/mol, wherein the equivalent ratio of A;B is 2:1 to 1:2;
C) 0.01-5 wt%, relative to the sum of the weights of components A) and B), of a catalyst in the form of a Lewis or Brønstedt base, wherein the conjugated acids of the latter have a pKA value of at least 10,
together with water, one or more organic solvents, optionally pigments and/or extenders and/or conventional lacquer additives.

## Revendications

1. Procédé pour l'application de revêtements à plusieurs couches pour l'application de peintures sur des véhicules à la fabrication en série ou lors de réparations, le cas échéant court séchage à l'air et application au mouillé-sur-mouillé d'un vernis clair suivis d'un durcissement général, **caractérisé en ce que** l'on utilise en tant que peinture de base et/ou vernis clair un produit de revêtement aqueux étant exempte de photo-inducteurs et des agents de durcissement polyaminiques, et contenant une composition aqueuse de liant, contenant :
A) 10 à 90% en poids d'un ou plusieurs composés à au moins deux atomes d'hydrogène de CH acide en moyenne et dérivant d'un ou plusieurs des groupement suivants, identiques our différents : 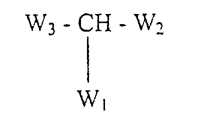 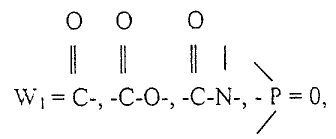 -CN ou -NO₂ 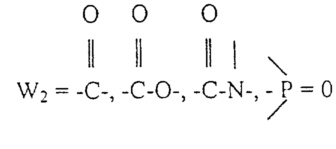 ou -CN 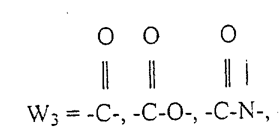 -H, alkyle ou alkylène
les groupes 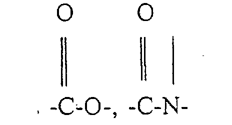 étant reliés chacun au groupe CH par l'intermédiaire de l'atome de carbone, et le groupe CH étant relié à un motif polymère ou oligomère par l'intermédiaire d'au moins un des groupes W₁, W₂ et/ou W₃, et
B) 90 à 10 % en poids d'un ou plusieurs copolymères (meth)acryliques, résines de polyesters et/ou de polyuréthannes, aptes à une addition de Michael, à au moins deux groupes α, β-insaturés reliés par l'atome de carbone de carbonyle de 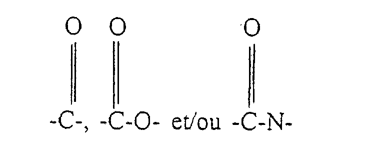 à un poids équivalent de C=C de 85 à 1800 et un poids moléculaire moyen, moyenne en nombre, Mn, de 170 à 10000 g/mol,
avec un rapport de 2 :1 à 1 :2 entre les équivalents de A) et de B),
C) 0,01 à 5 % en poids, par rapport à la somme des poids des composants A) et B), d'un catalysateur consistant en une base de Lewis ou de Brønstedt, les acides conjugués de ces dernières ayant une valeur de pKA d'au moins 10,
et de l'eau, un ou plusieurs solvants organiques, et le cas échéant des pigments et/ou des matières de charge et/ou des produits additifs usuels pour les peintures.
